Europäisches Patentamt

European Patent Office

Office européen des brevets

(19)

(11) Veröffentlichungsnummer: **0 400 513**
A2

## (12) EUROPÄISCHE PATENTANMELDUNG

(21) Anmeldenummer: **90110039.6**

(22) Anmeldetag: **28.05.90**

(51) Int. Cl.5: **G01N 21/71, G01N 21/31**

(30) Priorität: **02.06.89 DE 3917955**

(43) Veröffentlichungstag der Anmeldung:
**05.12.90 Patentblatt 90/49**

(84) Benannte Vertragsstaaten:
**AT DE GB IT**

(71) Anmelder: **BODENSEEWERK PERKIN-ELMER GMBH**
**Askaniaweg 4**
**D-7770 Uberlingen/Bodensee(DE)**

(72) Erfinder: **Huber, Bernhard**
**Hildegardring 42**
**D-7770 Uberlingen(DE)**

(74) Vertreter: **Weisse, Jürgen, Dipl.-Phys. et al**
**Bökenbusch 41 Postfach 11 03 86**
**D-5620 Velbert 11-Langenberg(DE)**

(54) **Vorrichtung zur Analyse von Quecksilber oder Hydridbildnern durch Atomabsorptionsmessung.**

(57) Eine Vorrichtung zur Analyse von Quecksilber oder Hydridbildnern durch Atomabsorptionsmessung, enthält übliche Mittel (10) zum Austreiben des Quecksilbers oder des Hydridbildners aus einer Probe zur Erzeugung von Quecksiberdampf oder einem flüchtigen Hydrid. Eine linienemittierende Lichtquelle (58) sendet ein Meßlichtbündel (56) mit den Resonanzlinien des Quecksilbers oder des Hydridbildners aus. In eine Meßküvette (26) wird der Quecksilberdampf oder das Hydrid eingeleitet. Das Meßlichtbündel (56) tritt durch diese Meßküvette (26) hindurch. Ein Detektor (60) ist von dem Meßlichtbündel (56) direkt, ohne Monochromator beaufschlagt. Bei einer solchen Vorrichtung sind zur Unterdrückung von unspezifischer Absorption und des Einflusses der spektralen Reinheit der Lichtquelle Mittel (66) zur Erzeugung eines ein- und ausschaltbaren Magnetfeldes vorgesehen, durch welches unter Ausnutzung des Zeeman-Effektes eine periodische relative Verschiebung der emittierten Spektrallinien der Lichtquelle (58) und der Resonanzlinien des Atomdampfes in der Meßküvette (26) hervorrufbar ist. Zur Bestimmung von Quecksilber ist eine Vorrichtung zum Anreichern des Quecksilbers vorgesehen, durch welche der Quecksilberdampf hindurchleitbar ist, mit wenigstens einer Waschflasche (14), einem der Waschflasche (14) nachgeschalteten Trockenrohr (22) und einem Rohr (24) mit einem Körper (28) aus einem amalgambildenden Metall.

## Vorrichtung zur Analyse von Quecksilber oder Hydridbildnern durch Atomabsorptionsmessung

### Technisches Gebiet

Die Erfindung betrifft eine Vorrichtung zur Analyse von Quecksilber oder Hydridbildnern durch Atomabsorptionsmessung, enthaltend

(a) Mittel zum Austreiben des Quecksilbers oder des Hydridbildners aus einer Probe zur Erzeugung von Quecksiberdampf oder einem flüchtigen Hydrid,

(b) eine linienemittierende Lichtquelle, welche ein Meßlichtbündel mit den Resonanzlinien des Quecksilbers oder Hydridbildners aussendet,

(c) eine Meßküvette, in welche der Quecksilberdampf oder das Hydrid eingeleitet wird und durch welche das Meßlichtbündel hindurchtritt, und

(d) einen von dem Meßlichtbündel direkt, ohne Monochromator beaufschlagten Detektor

### Zugrundeliegender Stand der Technik

Quecksilber ist ein Element, das bereits bei Raumtemperatur in Dampfform einatomig vorliegt und so der Atomabsorptionsmessung zugänglich ist Das Quecksilber kann dazu aus einer Probenlösung durch Reduktion, z.B. mittels Natriumborhydrid, freigesetzt werden Der so gebildete Quecksilberdampf wird von einem Trägergasstrom in eine rohrförmige Meßküvette transportiert, die von dem Meßlichtbündel eines Atomabsorptions-Spektrometers durchsetzt ist

Die DE-OS 37 23 178 zeigt eine Fließinjektionsvorrichtung, bei welcher mittels einer Schlauchpumpe eine Strömung von Reagenz zu einem Meßgerät erzeugt wird Durch ein Umschaltventil mit einer Rohrschleife, das in einer Leitung einer Trägerflüssigkeit liegt, wird eine in der Rohrschleife enthaltene Probenflüssigkeit in die Strömung von Reagenz eingeleitet Das Reagenz ist ein Reduktionsmittel, welches aus hydridbildenden Bestandteilen der Probenflüssigkeit, wie Arsen, entsprechende flüchtige Hydride erzeugt, die in einem Gasabscheider aus der Flüssigkeitsströmung abgeschieden und in eine beheizte Meßküvette geleitet werden. In gleicher Weise kann auch Quecksilber aus der Probenlösung freigesetzt werden.

Die DE-AS 29 43 092 beschreibt zum Stand der Technik ein Verfahren, bei welchem Quecksilber aus der Probe mittels eines Reduktionsmittels ausgetrieben wird. Zur Bestimmung kleiner Quecksilbermengen wird der durch die Reduktion erhaltene Quecksilberdampf zur Anreicherung über Silber- oder Goldwolle geleitet. Dabei bildet das Quecksilber mit dem Silber bzw. Gold ein Amalgam. Das so als Amalgam gebundene Quecksilber kann anschließend durch Erhitzen wieder ausgetrieben und in eine Meßküvette geleitet werden. In der Meßküvette wird dabei eine höhere Quecksilberkonzentration erhalten als bei der direkten Messung des durch das Reduktionsmittel aus der Probenlösung ausgetriebenen Quecksilberdampfes Auf diese Weise kann die Empfindlichkeit etwa um den Faktor 10 gesteigert werden.

Bei diesen Verfahren der Anreicherung des Quecksilbers mittels einer Amalgambildung werden die aus der Probenflüssigkeit freigesetzten flüchtigen Bestandteile, wie z.B. Quecksilberdampf, durch wenigstens eine Waschflasche und anschließend durch ein Trockenrohr geleitet, bevor sie über das Goldnetz oder die Goldwolle strömen.

Bei den bekannten Verfahren wird zur Messung der Atomabsorption ein Atomabsorptions-Spektrometer mit einem Monochromator benutzt. Das ist ein sehr aufwendiges Gerät. Das Atomabsorptions-Spektrometer ist schwer, bedarf einer genauen Justage und kann daher nur stationär eingesetzt werden.

Es sind auch Anordnungen bekannt, bei denen zur Atomabsorptionsmessung an Quecksilberdampf ein einfaches Photometer benutzt wird. Ein solches Photometer besteht aus einer Quecksilberlampe als Lichtquelle und einem Photomultiplier als Detektor. Ein von der Lichtquelle ausgehendes Meßlichtbündel wird durch die Meßküvette geleitet, in welche der Quecksilberdampf in der üblichen Weise von einem Trägergas transportiert wird.

Der Quecksilberdampf wird dabei durch Reduktion erzeugt. Dabei tritt unspezifische Absorption, beispielsweise durch Wasserdampf, auf. Es ist auch möglich, das Quecksilber durch Erhitzen aus festen Proben auszutreiben. Dabei muß aber mit großen Mengen an störendem Rauch gerechnet werden. Der Rauch führt ebenfalls zu unspezifischer Absorption. Eine solche unspezifische Absorption verfälscht das Meßergebnis.

Ein weiteres Problem stellt die Lichtquelle dar. Da ohne Monochromator gearbeitet wird, der nur eine ausgewählte Spektrallinie zum Detektor durchlassen würde, geht die spektrale Reinheit der Lichtquelle in das Meßergebnis ein. Die Eichkurve ist gekrümmt. Die spektrale Reinheit der Lichtquelle kann sich im Laufe der Zeit ändern. Auch das führt zu erheblichen Fehlerquellen.

Durch die CH-PS 559 903 und die damit im wesentlichen inhaltsgleiche GB-PS 1 385 791 ist es bekannt, bei der Atomabsorptions-Spektroskopie zur Unterdrückung der Untergrundabsorption die Wellenlängen der Resonanzlinien einer atomisierten Probe relativ zu denen einer linienemittierenden Lichtquelle, welche die Resonanzlinien eines gesuchten Elements aussendet, durch Anlegen eines Magnetfeldes unter Ausnutzung des Zeeman-Effektes zu verschieben. Das Magnetfeld ist aus- und einschaltbar. Aus der Differenz der gemessenen Intensitäten des Meßlichtbündels kann die spezifische Absorption bestimmt werden. Bei der dort angewandten Vorrichtung handelt es sich um ein Atomabsorptions-Spektrometer mit einer Atomisierungseinrichtung, z.B. einer Flamme, bei welcher eine Probenflüssigkeit durch hohe Temperaturen atomisiert wird. Das Atomabsorptions-Spektrometer enthält einen Monochromator, durch welchen aus dem Linienspektrum des gesuchten Elementes nur eine einzige Resonanzlinie und deren unmittelbare Umgebung ausgewählt und auf den Detektor geleitet wird.

Durch die DE-PS 1 964 469 ist es zu dem gleichen Zweck bekannt, ein Magnetfeld an die Lichtquelle anzulegen und so die Wellenlängen der emittierten Spektrallinien zu verändern.

In einem Aufsatz von Mertens und Althaus in "Fresenius Zeitschrift für analytische Chemie" (1983) 316; 696 bis 698 ist ein Verfahren zur Bestimmung von Quecksilber mit Hilfe der Amalgamtechnik unter Verwendung von Hydroxylammoniumchlorid und Natriumborhydrid oder Zinn (II)-Chlorid beschrieben. Dabei wird Quecksilber in einem Reaktionsgefäß aus einer Probenlösung durch Zugabe von Reagenz freigesetzt und von einem Stickstoffstrom zunächst durch eine Waschflasche und eine Trockenvorrichtung geleitet. Der Stickstoffstrom fließt dann über ein Gold-Platin-Netz. Dort wird das Quecksilber als Amalgam gebunden und angereichert. Durch eine Heizung kann das Quecksilber dann wieder freigesetzt und in die Meßküvette eines Atomabsorptions-Spektrometers eingeleitet werden.

In einem Aufsatz von Piwonka, Kaiser und Tölg in "Fresenius Zeitschrift für analytische Chemie" (1985) 321: 225 - 234 ist ein Verfahren zur Bestimmung von Selen· durch Hydrid-Atomabsorptions-Spektrometrie bekannt, bei welchem durch Zusatz eines Reagenz Seien als flüchtiges Hydrid aus einer flüssigen Probe freigesetzt wird. Das Hydrid wird in einer Bohrung eines durch flüssigen Stickstoff gekühlten Aluminiumblocks an einem Adsorptionsmittel adsorbiert. Dadurch erfolgt eine Anreicherung des Hydrids. Anschließend wird das Absorptionsmittel mit dem Hydrid in einen Ofen bewegt, wodurch das Hydrid ausgetrieben wird. Das freigesetzte Hydrid wird von einem Heliumstrom in die Meßküvette eines Atomabsorptions-Spektrometers geleitet.

Die DE-OS 27 37 727 beschreibt ein Spektrometer, bei welchem die sogenannte "Vorwärtsstreuung" ausgenutzt wird. Ein Meßlichtbündel durchsetzt einen Polarisator, eine Meßküvette und einen dahinter angeordneten, zu dem Polarisator gekreuzten Analysator. Die Meßküvette ist in einem transversalen oder longitudinalen Magnetfeld angeordnet. Dadurch erfolgt eine Zeeman-Aufspaltung der Resonanzlinien der absorbierenden Atome. Die Wechselwirkung der Strahlung des Meßlichtbündels mit dem im Magnetfeld befindlichen Atomen eines gesuchten Elements ist für die verschiedenen Zeeman-Komponenten der Resonanzlinien unterschiedlich. Dadurch erfolgt eine Drehung der Polarisationsebene, die von der Konzentration des gesuchten Elements in dem Probendampf abhängt. Wenn sich keine Atome des gesuchten Elements in der Meßküvette befinden, tritt kein Licht durch den zu dem Polarisator gekreuzten Analysator. Durch die Atome des gesuchten Elements in der Meßküvette erfolgt eine von der Konzentration abhängige Aufhellung am Analysator.

**Offenbarung der Erfindung**

Der Erfindung liegt die Aufgabe zugrunde, eine möglichst einfach aufgebaute, dabei aber hinreichend genaue und empfindliche Meßvorrichtung der eingangs definierten Art für Quecksilber oder Hydridbildner zu schaffen.

Erfindungsgemäß wird diese Aufgabe gelöst durch

(e) Mittel zur Erzeugung eines ein- und ausschaltbaren Magnetfeldes, durch welches unter Ausnutzung des Zeeman-Effektes eine periodische relative Verschiebung der emittierten Spektrallinien der Lichtquelle und der Resonanzlinien des Atomdampfes in der Meßküvette hervorrufbar ist.

Vorteilhafterweise enthält das Gerät für die Bestimmung von Quecksilber weiterhin

(f) eine Vorrichtung zum Anreichern des Quecksilbers, durch welche der Quecksilberdampf hindurchleitbar ist, mit wenigstens einer Waschflasche, einem der Waschflasche nachgeschalteten Trockenrohr und einem Rohr mit einem Körper aus einem amalgambildenden Metall.

Durch die Anreicherung des Quecksilbers als Amalgam, die üblicherweise sowieso eine Waschflasche und ein dieser nachgeschaltetes Trockenrohr enthält, werden Rauch und Wasserdampf entfernt. Gleichzeitig erfolgt durch die Anreicherung eine Erhöhung der Konzentration des Quecksilbers bei der Messung, wodurch der Einfluß störender Absorptionen weiter vermindert wird. Die Vorrichtung zur Anreicherung wirkt also in zweifacher Weise so, daß eine Messung ohne Monochromator möglich wird. Durch die periodische relative Verschiebung der Wellenlängen von Lichtquelle und zu messendem Quecksilberdampf wird der Einfluß von unspezifischer Absorption weiter verringert. Es wird aber auch der Einfluß der spektralen Reinheit der Lichtquelle, also praktisch von störenden Emissionen der Lichtquelle, eliminiert. Nur die spezifische Absorption wird ja durch die Linienverschiebung mittels des Zeeman-Effektes beeinflußt.

Es kann auf diese Weise ein höchst einfach aufgebautes Gerät für die Quecksilberbestimmung durch Atomabsorptionsmessung aufgebaut werden. Das Gerät zeigt hohe Empfindlichkeit und ist nicht durch unspezifische Absorptionen oder die spektrale Reinheit der Lichtquelle beeinflußt.

Eine besonders einfache Meßeinrichtung ergibt sich, wenn die Meßküvette ein beheiztes Rohr ist, das in den Polschuhen eines wechselstromgespeisten Elektromagneten sitzt und in Längsrichtung von dem Meßlichtbündel durchsetzt wird.

Ein Ausführungsbeispiel der Erfindung ist nachstehend unter Bezugnahme auf die zugehörige Zeichnung näher beschrieben.

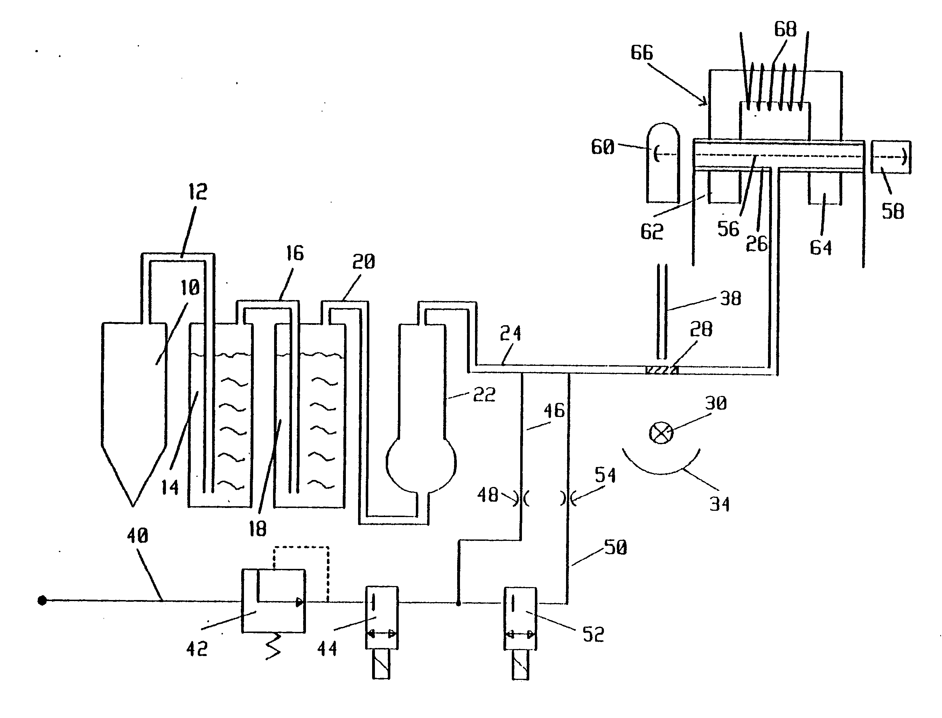

### Kurze Beschreibung der Zeichnung

Die Figur zeigt schematisch eine Vorrichtung zur Analyse von Proben auf Quecksilber durch Atomabsorptionsmessung, wobei eine Anreicherung des Quecksilbers erfolgt und Untergrundabsorption oder -emission durch Anwendung des Zeeman-Effektes unterdrückt wird.

### Bevorzugte Ausführung der Erfindung

In der Figur ist mit 10 ein Gasabscheider bezeichnet. Der Gasabscheider bildet ein Reaktionsgefäß in welchem flüchtige Hydride oder Quecksilber, die durch ein Reduktionsmittel aus einer Probenflüssigkeit ausgetrieben werden, sich von der Probenflüssigkeit trennen und aus welcher diese Gase oder Dämpfe über eine Ausgangsleitung 12 abströmen. Der Gasabscheider 10 ist Teil einer Fließinjektionseinrichtung, wie sie in der oben schon erwähnten DE-OS 37 23 178 dargestellt und beschrieben ist.

Die Ausgangsleitung 12 ist in eine erste Waschflasche 14 bis in die Nähe des Bodens dieser Waschflasche 14 geführt. Von der Oberseite der dicht abgeschlossenen Waschflasche 14 geht eine Ausgangsleitung 16 ab, die in eine zweite Waschflasche 18 bis in die Nähe des Bodens dieser zweiten Waschflasche 18 geführt ist. Von der oberseite der dicht abgeschlossenen zweiten Waschflasche 18 geht eine Ausgangsleitung 20 ab, die zu einem Ende eines Trockenrohres 22 geführt ist. Von dem anderen Ende des Trockenrohres 22 geht ein Rohr 24 ab. Das Rohr 24 ist zu einer Meßküvette 26 geführt.

In dem Rohr 24 sitzt ein Goldnetz 28. Das Goldnetz 28 kann durch eine Lampe 30 mit Reflektor 34 beheizt werden. Üblicherweise werden zwei solcher Lampen vorgesehen. Der Deutlichkeit halber ist hier nur eine Lampe gezeichnet. Das Rohr 24 ist ein Quarzrohr. Die Wärmestrahlung von der Lampe 30 kann daher weitgehend ungeschwächt durch die Wandung des Rohres hindurchtreten und von dem Goldnetz 28 absorbiert werden. Durch einen Druckluftstrom von einem Druckluftauslaß 38 können das Rohr 24 und das Goldnetz 28 nach einer Aufheizung und nach Abschalten der Lampe 30 schnell wieder abgekühlt werden.

Über eine Trägergasleitung 40 wird ein inertes Trägergas, z.B. Argon, zugeführt. Der Druck des Trägergases wird durch einen Druckregler 42 geregelt. Stromab von dem Druckregler 42 sitzt in der Trägergasleitung 40 ein Absperrventil 44. Das Absperrventil 44 ist ein Magnetventil. Hinter dem Absperrventil 44 geht von der Trägergasleitung 40 eine erste Zweigleitung 46 aus. Die erste Zweigleitung 46 mündet in dem Rohr 24 stromauf von dem Goldnetz 28, also zwischen dem Trockenrohr 22 und dem Goldnetz 28. In der Zweigleitung 46 ist eine Strömungsdrossel 48 vorgesehen. Die Strömungsdrossel 48 ist so bemessen, daß bei geöffnetem Absperrventil 44 über die Zweigleitung 46 ein relativ geringer Trägergasstrom von etwa 75 Milliliter pro Minute fließt.

Von der Trägergasleitung 40 geht stromab von dem Absperrventil 44 und parallel zu der ersten Zweigleitung 46 eine zweite Zweigleitung 50 ab. In der zweiten Zweigleitung 50 sind ein Absperrventil 52 und eine Strömungsdrossel 54 angeordnet. Die Stömungsdrossel 54 ist so bemessen, daß bei geöffneten Absperrventilen 44 und 52 über die zweite Zweigleitung 50 ein Trägergasstrom fließt, der wesentlich größer ist als der Trägergasstrom in der ersten Zweigleitung 46. Der Trägergasstrom in der zweiten Zweigleitung 58 beträgt etwa 1000 Milliliter pro Minute.

Das Goldnetz 28 und das Rohr 24 können durch einen Druckluftstrom gekühlt werden, der durch den Druckluftauslaß 38 austritt. Der Druckluftauslaß 38 ist mit einer <nicht dargestellten) Druckluftleitung über ein Steuerventil verbunden.

Die Meßküvette 26 wird in Längsrichtung von einem Meßlichtbündel 56 durchsetzt. Das Meßlichtbündel 56 geht von einer Quecksilberlampe 58 als Lichtquelle aus, tritt durch die Meßküvette 26 und fällt unmittelbar, also ohne Durchgang durch einen Monochromator auf einen als Detektor dienenden Photomultiplier 60.

Die Meßküvette 26, die üblicherweise aus Quarz besteht, sitzt zwischen den Polschuhen 62 und 64 eines Elektromagneten 66. Mit 68 ist die Wicklung des Elektromagneten 66 bezeichnet. Durch den Elektromagneten 66 kann ein Magnetfeld zwischen den Polschuhen 62,64 und so in Längsrichtung der Meßküvette und des Meßlichtbündels 56 erzeugt werden. Der Elektromagnet ist abwechselnd ein-und ausschaltbar.

Die beschriebene Anordnung arbeitet wie folgt: Soll eine Analyse auf Quecksilber erfolgen, bei welchem das Quecksilber nach dem Amalgamverfahren angereichert wird, so muß das in dem Reaktionsgefäß 10 abgeschiedene Gas (Quecksilberdampf) durch die Waschflaschen 14 und 18 und durch das Trockenrohr 22 sowie das Rohr 24 fließen. Das Gas strömt dabei über das Goldnetz 28. Das Goldnetz 26 ist dabei nicht beheizt und von einer eventuell vorher durchgeführten Analyse in noch zu beschreibender Weise abgekühlt. Das Quecksilber wird daher auf der Oberfläche des Goldnetzes 28 als Amalgam gebunden und angereichert. Wenn eine genügende Anreicherung des Quecksilbers erreicht ist, wird das Goldnetz 28 durch Einschalten der Lampe 30 beheizt. Durch das Aufheizen zersetzt sich das Amalgam, und das Quecksilber wird von dem nach Öffnen des Absperrventils 44 über die erste Zweigleitung 46 fließenden, relativ schwachen Trägergasstrom zu der Meßküvette 26 transportiert. Dabei ergibt sich gegenüber einer direkten Einleitung des Quecksilberdampfes in die Meßküvette 26 eine Erhöhung der Konzentration um etwa einen Faktor zehn und ein entsprechend erhöhtes Meßsignal. Außerdem wird der Einfluß von störenden anderen Bestandteilen der Probe weiter vermindert.

Im Anschluß an die Messung wird durch öffnen des Absperrventils 52 wird über die zweite Zweigleitung 50 ein erhöhter Trägergasstrom durch das Rohr 24 geleitet. Das Rohr 24 wird dadurch gespült.

Die Lampe 30 wird ausgeschaltet. Ein Druckluftstrahl aus dem Druckluftauslaß 38 wird gegen das Rohr 24 im Bereich des Goldnetzes 28 geleitet und kühlt das Rohr 24 und das Godnetz 28 schnell ab, so daß die Apparatur nach kurzer Zeit schon wieder für die nächste Analyse mit kühlem Goldnetz 28 zur Verfügung steht.

Die Messung der Absorption in der Meßküvette erfolgt zunächst bei ausgeschaltetem Magnetfeld. des Elektromagneten 66. Dabei ergibt sich ein Meßwert, der sowohl die spezifische Absorption als auch unspezifische Absorptionen und störende Emissionen der Quecksilberlampe umfaßt. Danach wird die Absorption mit eingeschaltetem Elektromagneten gemessen. Die Differenz der Intensitäten wird bestimmt. Da sich nur die spezifische Absorption durch das Magnetfeld beeinflussen läßt, ergibt sich daraus die reine, nur durch das Quecksilber verursachte Absorption.

Durch die beschriebene Anordnung läßt sich ein einfaches und preisgünstiges Gerät für die Analyse von Proben auf Quecksilber bauen. Der Elektromagnet 66 kann einen sehr kleinen Luftspalt haben. Dadurch ergibt sich ein geringer Energiebedarf. Es entfallen empfindliche optische Bauteile wie ein Monochromator. Es ist daher keine Aufwendige Justage erforderlich. Das Gerät wird relativ leicht und könnte dadurch sogar transportabel ausgebildet sein. Ein solches transportables Gerät ist von großer Bedeutung, da Quecksilber ein gefährliches Umweltgift ist.

Um eine größere Schichtdicke bei kleinen Luftspalten zu erreichen, können mehrere Magnete oder Polschuhe hintereinander auf der Meßküvette angeordnet werden.

Das beschriebene Verfahren kann prinzipiell auch für andere Elemente angewandt werden, die flüchtige Hydride bilden. Dabei müßte dann die Küvette beheizt werden.

## Ansprüche

1. Vorrichtung zur Analyse von Quecksilber oder Hydridbildnern durch Atomabsorptionsmessung, enthaltend
(a) Mittel (10) zum Austreiben des Quecksilbers oder des Hydridbildners aus einer Probe zur Erzeugung von Quecksiberdampf oder einem flüchtigen Hydrid,
(b) eine linienemittierende Lichtquelle (58), welche ein Meßlichtbündel (56) mit den Resonanzlinien des Quecksilbers oder Hydridbildners aussendet,
(c) eine Meßküvette (26), in welche der Quecksilberdampf oder das Hydrid eingeleitet wird und durch welche das Meßlichtbündel (56) hindurchtritt, und
(d) einen von dem Meßlichtbündel (56) direkt, ohne Monochromator beaufschlagten Detektor (60),
**gekennzeichnet durch**
(e) Mittel (66) zur Erzeugung eines ein- und ausschaltbaren Magnetfeldes, durch welches unter Ausnutzung des Zeeman-Effektes eine periodische relative Verschiebung der emittierten Spektrallinien der Lichtquelle (58) und der Resonanzlinien des Atomdampfes in der Meßküvette (26) hervorrufbar ist.

2. Vorrichtung nach Anspruch 1 zur Bestimmung von Quecksilber, **gekennzeichnet durch**
(f) eine Vorrichtung zum Anreichern des Quecksilbers, durch welche der Quecksilberdampf hindurchleitbar ist, mit wenigstens einer Waschflasche (14), einem der Waschflasche (14) nachgeschalteten Trockenrohr (22) und einem Rohr (24) mit einem Körper (28) aus einem amalgambildenden Metall.

3. Vorrichtung nach Anspruch 1, **dadurch gekennzeichnet, daß** die Meßküvette (26) ein beheiztes Rohr ist, das in den Polschuhen (62,64) eines ein- und ausschaltbaren Elektromagneten (66) sitzt und in Längsrichtung von dem Meßlichtbündel (56) durchsetzt wird.